# EUROPEAN PATENT APPLICATION

(11) **EP 3 758 117 A1**
(43) Date of publication of application: **30.12.2020**
(21) Application number: 19756725.8
(22) Date of filing: 20.02.2019
(51) Int. Cl.: H01M 8/0206, C23C 26/00, H01M 8/0213, H01M 8/0215, H01M 8/0228, H01M 8/10

(54) **TITANIUM MATERIAL, SEPARATOR, CELL, AND FUEL CELL**

(30) Priority: 21.02.2018 JP 2018028491
(71) Applicant: NIPPON STEEL CORPORATION, Chiyoda-ku Tokyo 100-8071 (JP)
(72) Inventor: KAMINAKA, Hideya, Tokyo 100-0006 (JP); NOSE, Koichi, Tokyo 100-8071 (JP); NISHIYAMA, Yoshitaka, Tokyo 100-8071 (JP); IMAMURA, Junko, Tokyo 100-8071 (JP); SATO, Haruka, Tokyo 100-8071 (JP); TAKASHIMA, Yuya, Tokyo 100-8071 (JP)
(74) Representative: Vossius & Partner Patentanwälte Rechtsanwälte mbB
(86) International application number: PCT/JP2019/006410
(87) International publication number: WO 2019/163851

(57) **Abstract**

A titanium material including: a base material made of pure titanium or a titanium alloy; and a carbon layer covering a surface of the base material. The carbon layer includes non-graphitizable carbon, and has an R value (I₁₃₅₀/I₁₅₉₀) of 2.0 or more and 3.5 or less in the Raman spectroscopy using argon laser having a wavelength of 532 nm. Where I₁₃₅₀ is peak intensity at a wave number of around 1.35×10⁵ m⁻¹ in a Raman spectrum, and I₁₅₉₀ is peak intensity at a wave number of around 1.59×10⁵ m⁻¹ in a Raman spectrum. According to this titanium material, it is possible to realize low contact resistance by the carbon layer. Moreover, this titanium material is not susceptible to surface oxidation and capable of maintaining low contact resistance even when exposed to noble potential.

## Description

### TECHNICAL FIELD

The present invention relates to a titanium material, a separator for a fuel cell stack using the titanium material, a fuel cell using the separator, and a fuel cell stack using the fuel cell.

### BACKGROUND ART

Examples of the use of a metallic material excellent in conductivity include a current collector of a battery and a battery case. In fuel cell stack uses, such a metallic material is utilized as a metallic current collector-separator material. In an environment in which corrosion is likely to occur, stainless steel or titanium is used as a metallic material excellent in corrosion resistance. The reason why stainless steel has corrosion resistance is that an oxide film mainly composed of Cr₂O₃ is generated on its surface, thereby protecting the base material. Similarly, the reason why titanium has corrosion resistance is that an oxide film mainly composed of TiO₂ is generated on its surface, thereby protecting the base material.

While these oxide films are useful for improving corrosion resistance, their insufficient conductivity hinders utilization of the inherent conductivity of the metal constituting the base material. Accordingly, a titanium material that combines corrosion resistance and conductivity has been developed.

It is possible to combine corrosion resistance and conductivity of a titanium material by providing a layer including a noble metal on the surface of the titanium material (for example, Patent Literature 1). However, since noble metals are expensive, using a noble metal will raise cost of the titanium material. Accordingly, attempts have been made to combine corrosion resistance and conductivity by using carbon instead of a noble metal as shown below. Patent Literatures 2 to 6 each disclose a titanium material which is provided with a carbon-base conductive material on the outer layer thereof.

In the titanium material of Patent Literature 2, titanium carbide and a carbon film are formed in this order on the base material. The carbon film is formed by a plasma CVD process. In the titanium material of Patent Literature 3, an intermediate layer and a carbon layer are formed in this order on the base material. The intermediate layer includes titanium carbide and 0.1 to 40 atm% of O (oxygen). The carbon layer includes graphite. In the titanium material of Patent Literature 4, an intermediate layer and a carbon-base conductive layer are formed in this order on the base material. The intermediate layer includes titanium carbide. In a Raman spectrum obtained by the Raman spectroscopy on a carbon-base conductive layer, a peak intensity ratio of D band to G band (D/G ratio) is 0.10 or more and 1.0 or less.

In the titanium material of Patent Literature 5, an intermediate layer and a carbon layer are formed in this order on the base material. The intermediate layer includes titanium carbide. The carbon layer includes graphite. In the titanium material of Patent Literature 6, an intermediate layer and a carbon-base conductive layer are formed in this order on the base material. The intermediate layer includes titanium carbide. The carbon-base conductive layer has a two-layer structure which includes a carbon layer on the side closer to the base material, and a conductive resin layer on the side farther from the base material.

Moreover, Patent Literature 7 discloses a titanium material which includes a base material, and an oxide film formed on the outer layer of the base material. The oxide film includes a conductive compound such as carbonitride, etc. The conductive compound is protected by oxide. Patent Literature 8 discloses a titanium material which has on its surface a layer made of diamond-like carbon.

### CITATION LIST

### PATENT LITERATURE

Patent Literature 1: Japanese Patent Application Publication No. 2010-045052
Patent Literature 2: Japanese Patent No. 4825894
Patent Literature 3: Japanese Patent No. 6122589
Patent Literature 4: Japanese Patent No. 5564068
Patent Literature 5: Japanese Patent No. 4886884
Patent Literature 6: International Application Publication No. WO2015/068559
Patent Literature 7: International Application Publication No. WO2014/021298
Patent Literature 8: Japanese Patent Application Publication No. 2005-93172

### NON PATENT LITERATURE

Non Patent Literature 1: W.Lengauer and 6 others, "Solid state properties of group IVb carbonitrides", Journal of Alloys and Compounds, 217(1995), pp. 137-147
Non Patent Literature 2: C.N.R.Rao and 2 others, "Plasma Resonance in TiO, VO and NbO", Journal of Solid State Chemistry, 2(1970), pp. 315-317
Non Patent Literature 3: J.H.Houlihan and 2 others, "Magnetic Susceptibility and EPR Spectra of Titanium Oxides", Journal of Solid State Chemistry 12(1975), pp. 265-269
Non Patent Literature 4: Hideki Kume, and 3 others, "TEM Observation of Carbon Nanocoils and Their Tip-Catalyst Particles (in Japanese)", Osaka Research Institute of Industrial Science and Technology Report, No. 25(2011), pp. 55-59

### SUMMARY OF INVENTION

### TECHNICAL PROBLEM

However, although titanium materials disclosed in Patent Literatures 2 to 8 each initially have low contact resistance, they cannot maintain sufficiently low contact resistance when exposed to noble potential. This is because these titanium materials do not have sufficient oxidation resistance when exposed to noble potential. For a titanium material to be used in an environment exposed to noble potential, for example, a titanium material to be used for a separator of a polymer electrolyte fuel cell stack, there is need of maintaining lower contact resistance even in such an environment. For this reason, the titanium materials disclosed in Patent Literatures 2 to 8 are not satisfactory as the titanium material to be used in such an environment.

Accordingly, it is an object of the present invention to provide a titanium material and a separator, which can realize low contact resistance by a carbon layer, and which are not susceptible to surface oxidation and is capable of maintaining low contact resistance even when exposed to noble potential.

It is another object of the present invention to provide a fuel cell of a fuel cell stack, and a fuel cell stack, which are capable of maintaining high power generation efficiency.

### SOLUTION TO PROBLEM

A titanium material according to an embodiment of the present invention includes:
a base material made of pure titanium or a titanium alloy; and
a carbon layer covering a surface of the base material, wherein
the carbon layer includes non-graphitizable carbon, and has an R value of 2.0 or more and 3.5 or less, the R value being defined by the following Formula (1) in the Raman spectroscopy using argon laser having a wavelength of 532 nm: $R = {I}_{1350} / {I}_{1590}$ (1)
   where I₁₃₅₀ is a peak intensity at a wave number of around 1.35×10⁵ m⁻¹ in a Raman spectrum, and
   I₁₅₉₀ is a peak intensity at a wave number of around 1.59×10⁵ m⁻¹ in a Raman spectrum.

A separator of a fuel cell stack according to an embodiment of the present invention includes the above mentioned titanium material.

A fuel cell of a fuel cell stack according to an embodiment of the present invention includes the above mentioned separator.

A fuel cell stack according to an embodiment of the present invention includes the above mentioned fuel cell.

### ADVANTAGEOUS EFFECTS OF INVENTION

The titanium material according to an embodiment of the present invention can realize a low contact resistance by the carbon layer, and is not susceptible to surface oxidation and is capable of maintaining low contact resistance even when exposed to noble potential. The fuel cell and the fuel cell stack according to an embodiment of the present invention are capable of maintaining high power generation efficiency.

### BRIEF DESCRIPTION OF DRAWINGS

[FIG. 1] FIG. 1 is a schematic sectional view of a titanium material according to an embodiment of the present invention.
[FIG. 2A] FIG. 2A is a perspective view of a polymer electrolyte fuel cell stack according to an embodiment of the present invention.
[FIG. 2B] FIG. 2B is an exploded perspective view of a fuel cell (unit cell) of the fuel cell stack.
[FIG. 3] FIG. 3 is a diagram to show an example of temporal change of current density during alternating electrolysis.
[FIG. 4] FIG. 4 is a photograph to show an example of electron beam diffraction pattern.
[FIG. 5] FIG. 5 is a graph to show an example of a relationship between lattice spacing d and contrast intensity I.
[FIG. 6] FIG. 6 is a diagram to show the configuration of an apparatus for measuring the contact resistance of a titanium material.

### DESCRIPTION OF EMBODIMENTS

Hereinafter, embodiments of the present invention will be described in detail. In the description below, "%" regarding chemical compositions means, unless otherwise stated, "mass%".

### [Titanium material]

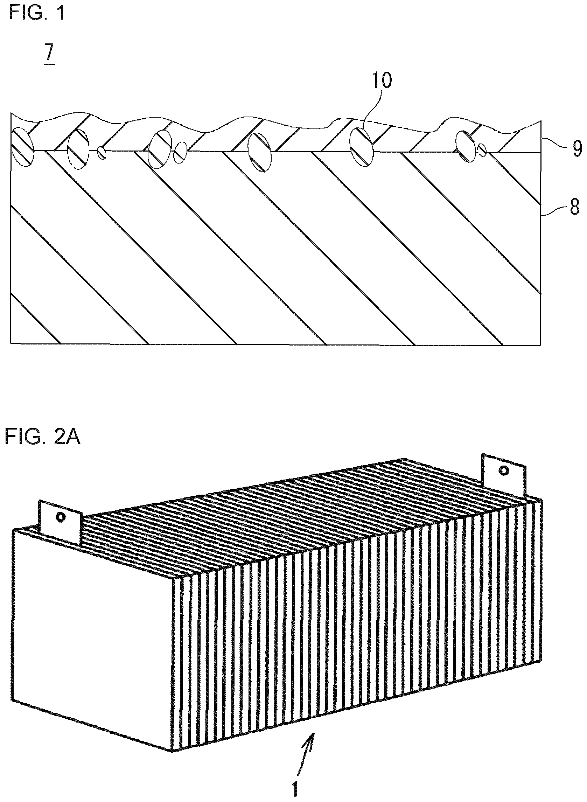

FIG. 1 a schematic sectional view of a titanium material according an embodiment of the present invention. A titanium material 7 includes a base material 8, a carbon layer 9 covering the surface of the base material 8, and a titanium carbonitride 10 formed between the base material 8 and the carbon layer 9.

In FIG. 1, clear boundaries are shown between the base material 8, the carbon layer 9, and the titanium carbonitride 10. However, in reality, the texture changes continuously, and there is no clear boundary between the base material 8, the carbon layer 9, and the titanium carbonitride 10. Such a characteristic is obtained by producing the titanium material 7 by a production method to be described below. Due to continuous change in the texture, exfoliation hardly occurs between the base material 8, the carbon layer 9, and the titanium carbonitride 10.

### <Base material>

The base material is made of pure titanium or a titanium alloy. Here, "pure titanium" means a metallic material containing 98.8% or more of Ti, with the balance being impurities. As pure titanium, for example, pure titanium of JIS Class 1 to JIS Class 4 may be used. Among these, pure titanium of JIS Class 1 and JIS Class 2 have advantages in that they have high economic efficiency and excellent workability. The "titanium alloy" means a metallic material containing 70% or more of Ti, with the balance being alloying elements and impurity elements. As the titanium alloy, for example, JIS Class 11, Class 13, or Class 17 for corrosion resistance, or JIS Class 60 for high strength can be used.

### <Carbon layer>

The carbon layer enables realization of low contact resistance of a titanium material. In other words, there is no need of using a noble metal for a titanium material to realize low contact resistance. For this reason, the cost of the titanium material can be reduced. The carbon layer includes non-graphitizable carbon. Further, the carbon layer has an R value of 2.0 or more and 3.5 or less, where the R value is defined by the following Formula (1) in the Raman spectroscopy using argon laser having a wavelength of 532 nm: $R = {I}_{1350} / {I}_{1590}$ (1) where I₁₃₅₀ is a peak intensity at a wave number of around 1.35×10⁵ m⁻¹ (1350 cm⁻¹) in a Raman spectrum, and I₁₅₉₀ is a peak intensity at a wave number of around 1.59×10⁵ m⁻¹ (1590 cm⁻¹) in a Raman spectrum.

To be more specific, I₁₃₅₀ is an integrated intensity at a wave number in a range of 1.00×10⁵ to 1.50×10⁵ m⁻¹. I₁₅₉₀ is an integrated intensity at a wave number in a range of 1.50×10⁵ to 1.80×10⁵ m⁻¹. The peak around 1.35×10⁵ m⁻¹ corresponds to the D band which is not attributed to the graphite structure. The peak around 1.59×10⁵ m⁻¹ corresponds to the G band which is attributed to the graphite structure. Therefore, the larger the R value, the smaller the proportion of graphite in the carbon layer will be.

With the R value being 2.0 or more, it becomes easy to ensure high corrosion resistance of the carbon layer in a wet environment. To sufficiently achieve this effect, the R value is preferably 2.2 or more. With the R value being 3.5 or less, the electrical conductivity can be increased compared to a case in which the R value is more than 3.5. If the thickness of the carbon layer is 10 to 100 nm, it is possible to ensure electrical conductivity necessary for a separator of fuel cell stack by keeping the R value 3.5 or less. To sufficiently achieve this effect, the R value is preferably 3.0 or less.

Non-graphitizable carbon means amorphous carbon which cannot be converted into graphite even when heated to 3300 K under normal pressure or reduced pressure. Whether or not a carbon layer includes non-graphitizable carbon can be determined by a diffraction image attributed to the d002 layered structure of graphite in the carbon layer, that is, a diffraction image by the (002) plane of graphite, which is observed by transmission electron microscope (TEM). The expression "002" regarding crystal refers to, unless otherwise stated, a Miller index for the graphite structure.

When a ring-shaped diffraction image attributed to d002 layered structure is not observed and, for example, a spotted diffraction image attributed to d002 layered structure is observed, it is possible to determine that the carbon layer is graphitizable carbon, that is, it does not include non-graphitizable carbon. On the other hand, when this spotted diffraction image is not observed, and a ring-shaped diffraction image attributed to d002 layered structure is observed, it is possible to determine that the carbon layer includes non-graphitizable carbon. Note that the ring-shaped and spotted diffraction images attributed to the d002 layered structure are not observed in a transmission electron microscope image of diamond-like carbon (see Patent Literature 8). Therefore, the diamond-like carbon is not non-graphitizable carbon.

In general, carbon is gasified (CO or CO₂) when exposed to a state of noble potential. As a result that the carbon layer is non-graphitizable carbon, such gasification is suppressed. As a result, the thickness of the carbon layer hardly decreases even when exposed to a state of noble potential. In other words, such carbon layer is excellent in corrosion resistance.

Moreover, the non-graphitizable carbon is hard, and therefore excellent in wear resistance. The separator of a polymer electrolyte fuel cell stack is used in a state of being in contact with an electrode membrane. When a titanium material is used for the separator, a carbon layer including non-graphitizable carbon comes into contact with the electrode membrane. The carbon layer is hardly damaged by the contact with the electrode membrane.

Having an R value of 2.0 or more and 3.5 or less, and including non-graphitizable carbon, the carbon layer will be excellent in corrosion resistance, and have high hardness and excellent wear resistance.

The thickness of the carbon layer is preferably 10 to 100 nm. Although the carbon layer has some conductivity, its conductivity is lower compared with those of metals such as Ti. For that reason, increasing the thickness of the carbon layer will result in an increase in the resistance value in the thickness direction of the carbon layer. To sufficiently decrease the resistance value, the thickness of the carbon layer is preferably 100 nm or less, and more preferably 50 nm or less. Moreover, when the thickness is too small, the carbon layer becomes easy to be damaged. If the carbon layer is damaged, the foundation (base material, titanium carbonitride, etc.) is exposed in that portion and will be no more protected by the carbon layer. To sufficiently protect the foundation by the carbon layer, the thickness of the carbon layer is preferably 10 nm or more, and more preferably 20 nm or more.

The thickness of the carbon layer is measured as described below. The C content is measured by the glow discharge optical emission spectrometry (GDOES) while performing sputtering on the carbon layer in its thickness direction from its surface. A depth at which the C content reaches 1/2 of the maximum value is defined as the thickness of the carbon layer. In that occasion, the discharging part has a circular shape with a diameter of 4 mm. Therefore, the thickness of the carbon layer is an average thickness of the carbon layer in the circular region with a diameter of 4 mm. As described later, since the carbon layer does not necessarily cover the whole surface of the foundation, this circular region may include a portion where there is no carbon layer.

When the foundation exposed from the carbon layer, for example, a titanium carbonitride is exposed to noble potential, it dissolves and is oxidized to become titanium oxide. As the titanium oxide, TiO₂ is likely to be formed. TiO₂ substantially does not have conductivity. In this case, in the surface of the titanium material, substantially only the portion covered with the carbon layer bears conductivity.

Here, a proportion of the area of the portion covered with the carbon layer to the surface area of the foundation is defined as a "covering ratio of carbon layer". To sufficiently protect the foundation and sufficiently decrease the contact resistance with the electrode membrane and the like, the covering ratio of carbon layer is preferably 60% or more, more preferably 80% or more, and most preferably 100%. The covering ratio of carbon layer is measured in the following way. Mapping of the surface of the titanium material by I₁₃₅₀ (the unit is cps) is performed by the Raman spectroscopy of the surface of the titanium material. A proportion of the area of the region in which I₁₃₅₀ has an integrated intensity not less than 1/5 of the maximum integrated intensity to the area of the mapped region is defined as the covering ratio of carbon layer.

### (Titanium carbonitride)

In the titanium material of the present invention, a titanium carbonitride is not an essential component. The titanium carbonitride is represented by a chemical formula TiC₁₋ₓNₓ (0 ≤ x ≤ 0.8). The titanium carbonitride may be present in a dispersed manner on the base material, as shown in FIG. 1. In this case, the morphology of the titanium carbonitride is, for example, granular. The titanium carbonitride may be formed continuously in a sheet shape on the surface of the base material.

The conductivity of titanium carbonitride is between the conductivity of titanium carbide (for example, 1.00 Ω⁻¹•m⁻¹×10⁶) and the conductivity of titanium nitride (for example, 3.80 Ω⁻¹•m⁻¹×10⁶)(Non Patent Literature 1). Moreover, the conductivity of TiO is 0.52 Ω⁻¹•m⁻¹×10⁶ (Non Patent Literature 2). The conductivity of Ti₃O₅ is 0.0035 Ω⁻¹•m⁻¹×10⁶ (Non Patent Literature 3). The conductivity of Ti₄O₇ is 0.15 Ω⁻¹•m⁻¹×10⁶ (Non Patent Literature 3). In other words, the conductivity of titanium carbonitride is higher than the conductivity of TiOₓ (1 ≤ x < 2) which is a low-order oxide of titanium. Therefore, when the titanium material of the present invention includes the titanium carbonitride, the resistance of the near-surface portion can be decreased to be lower than that of a conventional titanium material using TiC or TiOₓ.

When the titanium material of the present invention includes the titanium carbonitride, it is preferable that the titanium material includes an appropriate amount of titanium carbonitride. It is assumed that an integrated intensity of a peak attributed to the (101) plane of α-Ti phase be "Ti(101)", and an integrated intensity of a peak attributed to the (200) plane of titanium carbonitride be "TiCN(200)" in X-ray diffraction analysis in which CoKα ray is used and the incident angle is 0.3° (deg). An "abundance ratio of carbonitride" is defined as TiCN(200)/Ti(101). The abundance ratio of carbonitride is, for example, preferably 0.10 to 0.45.

Since the conductivity of titanium carbonitride is higher than the conductivity of carbon, current is more likely to flow through a path via the titanium carbonitride among conduction paths between the base material and the carbon layer. To ensure sufficient conductivity in the near-surface portion of the titanium material, the abundance ratio of carbonitride is preferably 0.10 or more. Since it is difficult to make the covering ratio of the carbon layer be 100%, it is unavoidable that a part of the titanium carbonitride will be exposed from the carbon layer, and exposed to noble potential, thereby changing to titanium oxide having no conductivity. Therefore, when the covering ratio of the carbon layer is not sufficiently high (for example, 50% or less), to suppress the generation of titanium oxides having no conductivity, the abundance ratio of carbonitride is preferably 0.45 or less.

When the morphology of the titanium carbonitride is granular, an average particle size of titanium carbonitride is preferably, for example, 20 nm or more, and not more than the thickness of the carbon layer. The titanium carbonitride can achieve effect of causing the carbon layer and the base material to adhere closely to each other. To sufficiently achieve this effect, an average particle size of titanium carbonitride is preferably 20 nm or more. On the other hand, as shown in FIG. 1, a granular titanium carbonitride protrudes from the surface of the base material. For this reason, when the average particle size of titanium carbonitride is too large, the titanium carbonitride may break through the carbon layer to be exposed when high pressure is applied to the surface of the titanium material. To avoid such a situation, the average particle size of titanium carbonitride is preferably not more than the thickness of the carbon layer.

The average particle size of titanium carbonitride is measured in the following way. First, a thin film specimen for TEM observation is fabricated from a titanium material according to the FIB(Focused Ion Beam)-µ(micro) sampling method. An electron microscope image of the specimen is obtained, and in that field of view, particles of titanium carbonitride are identified from EDS (Energy Dispersive X-ray Spectrometry) analysis and electron beam diffraction analysis. The field of view is defined as a square region each side of which has a length of about 0.17 µm. Then, in the field of view, an average of a major axis and a minor axis, which is determined for each of all the particles which have been identified as titanium carbonitride, is defined as an average particle size of each particle. These average particle sizes are averaged over all the particles to obtain an average particle size of titanium carbonitride in the field of view. The average particle sizes of three field of views are averaged to obtain an average particle size of titanium carbonitride for the target titanium material.

### (Other components of titanium material)

Titanium carbide (TiC) may be formed between the base material and the carbon layer.

### [Production method of titanium material]

A titanium material according to the embodiment of the present invention can be produced by a production method including:
oxidization step of oxidizing a surface of a base material made of pure titanium or a titanium alloy;
a carbon source supply step of supplying, after the oxidization step, resin paint including one or more kinds selected from a group consisting of polyvinylidene chloride, sugar, cellulose, phenolic resin, furfuryl alcohol resin, acrylic resin, epoxy resin, thermosetting polyimide resin, and charcoal, on the surface of the base material; and
a heat treatment step of heat-treating, after the carbon source supply step, the base material at 620 to 820°C in atmosphere in which oxygen partial pressure is 0.1 Pa or less.

By the above mentioned production method, it is possible to produce a titanium material which can realize low contact resistance by the carbon layer, and which is not susceptible to progressive surface oxidation and is capable of maintaining low contact resistance even when exposed to noble potential.

The above mentioned production method may further include a cold rolling step of applying lubricant including amine on the surface of the base material, before the oxidization step, and cold rolling the base material applied with the lubricant.

The resin paint may further include nitrogen.

Hereinafter, the above mentioned production method will be described in detail. As described above, this production method includes the oxidization step, the carbon source supply step, and the heat treatment step.

### <Oxidization step>

In this step, the surface (near-surface portion) of the base material made of pure titanium or a titanium alloy is oxidized by, for example, a heat treatment in an oxidizing atmosphere, or anodization (anodic oxidation) treatment. As a result of this, an oxide film having a thickness of, for example, 10 to 50 nm is formed on the surface of the base material. If the oxide film is formed by applying Ti, which is not originated from the base material, on the base material by means of vapor deposition or the like, adhesion of the titanium oxide film to the base material may become insufficient, which is not preferable.

### <Heat treatment in oxidizing atmosphere>

The oxidizing atmosphere may be, for example, the air atmosphere. To obtain an oxide film having a thickness of about 10 to 50 nm, the heat treatment temperature may be, for example, 350°C or more and 700°C or less, and the heating time may be, for example, 5 to 90 minutes after reaching a predetermined temperature. The heat treatment condition may be at 600°C for 5 minutes in the air atmosphere.

### <Anodization treatment>

Anodization treatment can be performed by using an aqueous solution which is used for normal anodization of titanium, for example, a phosphoric acid aqueous solution, a sulfuric acid aqueous solution, and the like. The voltage of anodization is 15 V or more and its upper limit is a voltage that does not cause insulation breakdown (about 150 V). The voltage of anodization is, for example, 30 V. Anodization may be performed by, for example, alternating electrolysis. In this case, if the final potential of the base material is + potential (current density), the surface of the base material will be oxidized regardless of the pattern (temporal change of voltage (current density)) of alternating electrolysis.

### <Carbon source supply step>

After the oxidization step, the carbon source supply step is performed. In the carbon source supply step, resin paint including one or more kinds selected from a group consisting of polyvinylidene chloride, sugar, cellulose, phenol resin (phenol formaldehyde resin), furfuryl alcohol resin, acrylic resin, epoxy resin, thermosetting polyimide resin, and charcoal is supplied to the surface of the base material. Since titanium oxide is formed in the oxidization step in the near-surface portion of the base material before the supply of resin paint, the resin paint will be supplied on the titanium oxide.

When resin which is solid at the room temperature is used, the resin paint may be, for example, one in which micro particles of this resin are dispersed in water. Phenolic resin, furfuryl alcohol resin, acrylic resin, epoxy resin, and thermosetting polyimide resin are preferable in that these can be made into paint with ease. The resin paint may include organic matters other than polyvinylidene chloride, sugar, cellulose, phenol resin (phenol formaldehyde resin), furfuryl alcohol resin, acrylic resin, epoxy resin, thermosetting polyimide resin, and charcoal.

Generally, heating resin may result in porous carbon which permeates gas or water. When the carbon layer is porous carbon, it is not possible to sufficiently protect the foundation. Phenol resin, furfuryl alcohol resin, acrylic resin, thermosetting polyimide resin, and epoxy resin have high carbonization yield in the heat treatment step. For that reason, use of these resins will make it possible to obtain dense non-graphitizable carbon which is not porous carbon in the heat treatment step.

Using thermosetting polyimide resin as the carbon source is particularly preferable. In this case, since polymerization of thermosetting polyimide resin progresses in the heat treatment step to be described below, a dense carbon layer is likely to be obtained. Examples of the thermosetting polyimide resin include PMR (in situ Polymerization of Monomer Reactants) type (for example, terminal nadic acid type), terminal acetylene type, and bismaleimide type.

The thickness of the resin paint which has been supplied to the surface of the base material (hereinafter, referred to as "coating thickness") is, for example, 5 to 40 µm. However, when the resin paint includes organic solvent or water, the coating thickness is defined as the thickness of resin after the organic solvent and water, which are included in the resin paint, are removed by drying. When the coating thickness is less than 5 µm, carbon in the resin paint is consumed in the reduction of titanium oxide formed in the near-surface portion of the base material in the heat treatment step, and may no more remains. In such a case, the carbon layer cannot be formed. When the coating thickness is more than 40 µm, the thickness of the carbon layer formed in the heat treatment step may be more than 100 nm which is a preferable upper limit. In this case, it is not possible to sufficiently decrease the resistance value in the thickness direction of the carbon layer.

### <Heat treatment step>

After the carbon source supply step, the heat treatment step is performed. In the heat treatment step, the base material to whose surface the resin paint has been supplied is heat-treated at 620 to 820°C in atmosphere in which oxygen partial pressure is 0.1 Pa or less (hereinafter, referred to as "low oxygen partial pressure atmosphere"). The low oxygen partial pressure atmosphere may be, for example, Ar atmosphere, or reduced pressure (vacuum) atmosphere. The heat treatment time may be 30 to 120 sec after the temperature of atmosphere reaches a predetermined temperature.

In the heat treatment step, titanium oxide in the near-surface portion of the base material is reduced by carbon in the resin paint to become metallic titanium. Moreover, non-graphitizable carbon is formed from part of carbon in the resin paint, which has not been consumed by the reduction of titanium oxide. As a result of this, a carbon layer including non-graphitizable carbon and having an R value of 2.0 or more and 3.5 or less is formed. To make such reaction occur, the heat treatment temperature and heat treatment time are expediently selected depending on the kind of resin paint, coating thickness, and the like. When the carbon layer is formed, titanium carbide may be formed between the base material and the carbon layer.

A carbon layer including non-graphitizable carbon is obtained from polyvinylidene chloride, sugar, cellulose, phenolic resin, furfuryl alcohol resin, acrylic resin, epoxy resin, thermosetting polyimide resin, and charcoal, in the heat treatment step. In these resins, cross-links formed in an early stage are likely to be maintained when carbonization occurs in the heat treatment step so that formation and growth of planar arrangement of crystallites (formation of crystal structure of graphite) are hindered. These resins are hard to be graphitized even if heat-treated at a high temperature (for example, 2000°C).

If the resin paint is mainly composed of graphitizable organic matter such as petroleum coke, coal coke, polyvinyl chloride, etc., a carbon layer having an R value of less than 2.0 will be obtained in the heat treatment step. In this case, the carbon layer cannot ensure high corrosion resistance in a wet environment and is likely to be gasified when exposed to noble potential. As described so far, it is not always the case that non-graphitizable carbon is obtained from any organic matter in the heat treatment step. In general, many of thermosetting resins are turned into non-graphitizable carbon by heating.

When producing a titanium material including a titanium carbonitride formed between the base material and the carbon layer, at least either one of the following countermeasures (i) and (ii) is performed:
(i) to further perform a cold rolling step to be described below, and
(ii) to use a resin paint further including nitrogen.

### <Cold rolling step>

The cold rolling step is performed before the oxidization step. In the cold rolling step, a lubricant (cold rolling oil) including amine is applied to the surface of the base material, and the base material applied with the lubricant is subjected to cold rolling. The amine may, for example, be included in the lubricant as a component of an extreme pressure additive.

After the cold rolling, a compound including nitrogen originated from amine remains near the surface of the base material. This compound will remain near the surface of the base material even if the base material is subjected to degreasing or alkaline cleaning after the cold rolling (the last finish rolling when cold rolling is performed multiple times). If the base material in this state is subjected to the oxidization step, the carbon source supply step, and the heat treatment step, the titanium oxide formed in the oxidization step is reduced by the carbon in the resin paint in the heat treatment step. At that time, titanium in the base material, nitrogen present near the surface of the base material, and carbon in the resin paint interact with each other to form a titanium carbonitride between the base material and the carbon layer.

### <When resin paint includes nitrogen>

The resin paint may include, for example, ammonium polyacrylate as a nitrogen source. The ammonium polyacrylate functions as a thickener of the resin paint. When resin paint including nitrogen is used and the heat treatment step is performed on the base material to which resin paint has been supplied to its surface in the carbon source supply step, the titanium oxide formed in the oxidization step is reduced by carbon in the resin paint. At that time, titanium in the base material, and carbon and nitrogen in the resin paint interact with each other to form titanium carbonitride between the base material and the carbon layer.

If the carbon source supply step and the heat treatment step are performed without performing the oxidization step, only a titanium carbonitride which is not covered by the carbon layer will be formed. This is conceivably because, due to absence of a sufficiently thick oxide film on the surface of the base material, a large amount of carbon is consumed in the generation of titanium carbide through direct interaction between the titanium of the base material and carbon of the resin paint.

In the above-described production method, carbon constituting the carbon layer is the carbon that has remained after being consumed in the reduction of titanium oxide. Moreover, titanium constituting a titanium carbonitride is the titanium that is generated as a result of the reduction of the titanium oxide formed in the near-surface portion of the base material. As a result, in an obtained titanium material, the texture changes continuously between each of the carbon layer, the titanium carbonitride, and the base material. For this reason, adhesion between each of the carbon layer, the titanium carbonitride, and the base material is high.

### [Separator, fuel cell, and polymer electrolyte fuel cell stack]

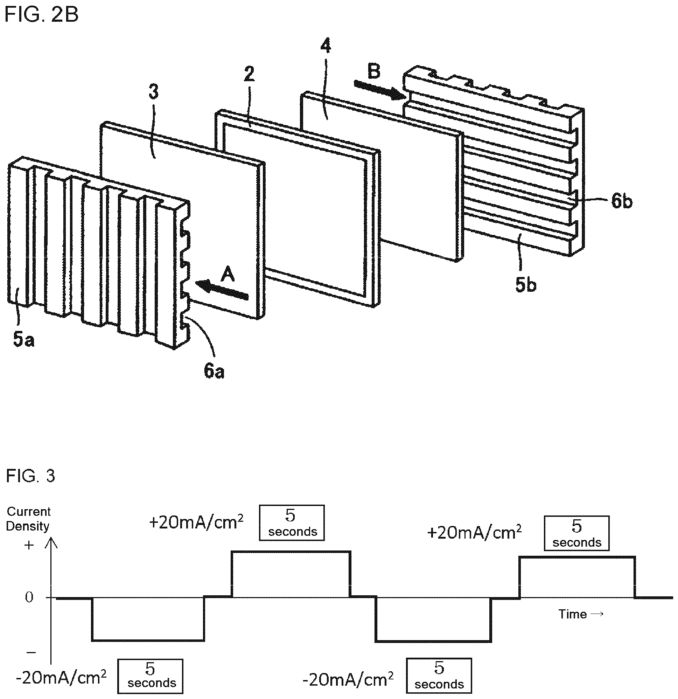

FIG. 2A is a perspective view of a polymer electrolyte fuel cell stack according to an embodiment of the present invention. FIG. 2B is an exploded perspective view of a fuel cell (unit fuel cell) of the fuel cell stack. As shown in FIGS. 2A and 2B, a fuel cell stack 1 is a set of unit fuel cells. In the fuel cell stack 1, a plurality of fuel cells are stacked and connected in series.

As shown in FIG. 2B, in the unit fuel cell, a fuel electrode membrane (anode) 3 and an oxidant electrode membrane (cathode) 4 are stacked respectively on one face and the other face of a solid polymer electrolyte membrane 2. Moreover, separator 5a, 5b is placed on top of each face of the stack. The separator 5a, 5b includes the above mentioned titanium material.

Typical materials for constituting the solid polymer electrolyte membrane 2 include a fluorine-based ion exchange resin membrane which includes a hydrogen ion (proton) exchange group. The fuel electrode membrane 3 and the oxidant electrode membrane 4 each include a diffusion layer made of a carbon sheet and a catalyst layer which is provided so as to be in contact with the surface of the diffusion layer. The carbon sheet is made from carbon fiber. Carbon paper or carbon cloth is used as the carbon sheet. The catalyst layer includes granular platinum catalyst, carbon for supporting catalyst, and fluorine resin having a hydrogen ion (proton) exchange group. An integral component in which the fuel electrode membrane 3 and the oxidant electrode membrane 4 are bonded to the solid polymer electrolyte membrane 2 is called as MEA (Membrane Electrode Assembly).

Fuel gas (hydrogen or hydrogen-containing gas) A is flown in a flow channel 6a which is a groove formed in the separator 5a. As a result of this, the fuel gas is supplied to the fuel electrode membrane 3. In the fuel electrode membrane 3, the fuel gas passes through the diffusion layer and reaches the catalyst layer. Moreover, oxidizing gas B such as air is flown in the flow channel 6b which is a groove formed in the separator 5b. As a result of this, the oxidizing gas is supplied to the oxidant electrode membrane 4. In the oxidant electrode membrane 4, the oxidizing gas passes through the diffusion layer and reaches the catalyst layer. As a result of supply of these gasses, electrochemical reaction occurs, and D.C. voltage is generated between the fuel electrode membrane 3 and the oxidant electrode membrane 4.

As the result of including the above mentioned titanium material, the separators 5a, 5b each has low contact resistance with the electrode membrane 3, 4 in an early stage. Moreover, since surface oxidation is hard to progress when the titanium material is exposed to noble potential, this low contact resistance is maintained in the separator environment of the polymer electrolyte fuel cell stack 1.

A flow channel 6b may be formed on the other face (the face opposite the face on which the flow channel 6a is formed) of the separator 5a. A flow channel 6a may be formed on the other face (the face opposite the face on which the channel 6b is formed) of the separator 5b. The separator 5a, 5b having a shape in which the flow channel (groove) is formed can be obtained by press forming a thin plate-like titanium material.

Alternatively, a plate-shaped base material may be formed into a shape of the separator 5a, 5b, and thereafter the oxidization step, the carbon source supply step, and the heat treatment step may be performed on the surface of the base material to form a carbon layer, etc. In this case as well, it is possible to obtain the separators 5a, 5b including the titanium material, which includes the base material, and the carbon layer covering the surface of the base material.

In this fuel cell and the polymer electrolyte fuel cell stack 1, low contact resistance between the separator 5a, 5b and the electrode membrane 3, 4 is maintained. As a result of this, these fuel cell and the polymer electrolyte fuel cell stack 1 can maintain high power generation efficiency.

The fuel cell stack of the present invention may be, without being limited to the polymer electrolyte fuel cell stack, for example, a solid electrolyte fuel cell stack, a molten carbonate fuel cell stack, or a phosphoric acid fuel cell stack.

### EXAMPLES

To confirm effects of the present invention, various titanium materials are fabricated and evaluated.

### 1. Preparation of base material and cold rolling step

As the base material, base materials A and B to be described below were prepared. The base material A was titanium of JIS Class 1, which is formed into a plate shape having a thickness of 0.1 mm by cold rolling. The cold rolling was conducted by applying a rolling lubricant including amine to the surface of titanium. The rolling lubricant was used with addition of 1% of a lubrication additive for oxidation protection manufactured by KANEDA Co., Ltd. This lubrication additive included dialkyldiphenylamine.

The base material A was not subjected to annealing. The base material B was obtained by subjecting the base material A to alkaline degreasing, and thereafter to bright annealing (BA) at 720°C for 30 sec in Ar atmosphere by using a continuous furnace. The Ar atmosphere was obtained by flowing industrial compressed argon gas, which has a purity of 99.995% or more, and O content of less than 3 ppm, in the continuous furnace. Some of the base material B was subjected to pickling with an aqueous solution containing 10% of nitric acid and 2% of fluoric acid to remove N originated from the lubrication additive (base material of Inventive Example 1 to be described below). For the remaining base material B and the base material A, it was expected that N originated from the lubrication additive remains on the surface.

The base material A and the base material B each had a width of 50 mm and a length of 100 mm. Table 1 shows the compositions of the base materials A and B. Between the base materials A and B, the contents were the same for each of C, H, N, O, and Fe.

### [Table 1]

**Table 1**

| Base material | C | H | N | O | Fe |
|---|---|---|---|---|---|
| A | 0.002 | 0.002 | 0.004 | 0.03 | 0.02 |
| B | 0.002 | 0.002 | 0.004 | 0.03 | 0.02 |

The unit is mass%.
The balance being Ti and other impurities.

### 2. Oxidization step

The oxidization step was performed by subjecting the base material to anodization, heat treatment in oxidizing atmosphere, or treatment with acid solution. Anodization was performed in a 10% sulfuric acid aqueous solution of a liquid temperature of 35°C. The base material was subjected to alternating (PR; Periodic Reverse) electrolysis. At that time, the potential of the base material in the final electrolysis treatment was noble. The current density at a peak time was 20 mA/cm². FIG. 3 shows temporal change in the current density during alternating electrolysis. As a result of that the potential of the base material in the final electrolysis treatment was noble, an oxide film (titanium oxide) was formed on the surface of the base material.

The heat treatment in the oxidizing atmosphere was conducted while using a gas-replaced muffle furnace manufactured by AS ONE Corporation and introducing air at a flow rate of 0.5 L/min from an air container into the furnace. The base material was heated at 550°C for 5 min.

For the treatment with acid solution, a 20% nitric acid aqueous solution was used.

### 3. Carbon source supply step

A resin paint was applied to the surface of the base material. The resin paint used was any of one mainly composed of aqueous acrylic resin, one mainly composed of an aqueous acrylic resin and added with a thickener, one mainly composed of a phenolic resin, one mainly composed of a petroleum-based tar resin and one mainly composed of a thermosetting polyimide resin. The resin paints other than the one mainly composed of a petroleum-based tar resin and the one mainly composed of a thermosetting polyimide resin included fine particles of the resin dispersed in at least one of an organic solvent and water. The petroleum-based tar resin was dissolved in toluene to obtain a resin paint. The thermosetting polyimide resin was dissolved in N-methyl-2-pyrrolidone (NMP) to obtain a resin paint.

The resin paint mainly composed of an aqueous acrylic resin was Hexacoat PS-K aqueous primer manufactured by NIPPE HOME PRODUCTS Co., Ltd. The thickener added to the resin paint was A-30 manufactured by TOAGOSEI Co., Ltd. The added amount of this thickener to the aqueous acrylic resin was 5 mass%. This thickener contained ammonium polyacrylate. The resin paint mainly composed of a phenolic resin was New Acnon NC manufactured by Kansai Paint Co., Ltd. The resin paint mainly composed of a thermosetting polyimide resin was a resin solution in which granular bisallyl nadimide (BANI-M manufactured by Maruzen Petrochemical CO, Ltd.) was dissolved in NMP. A mass ratio between bisallyl nadimide and NMP was 2 : 8.

Application of the resin paint to the base material was conducted by immersing the base material in the resin paint at the room temperature, and thereafter pulling it up at a constant speed. The base material applied with the resin paint was subjected to drying treatment by a warm-air heater at 100°C for 5 minutes. However, when the resin paint mainly composed of a thermosetting polyimide resin is used (Inventive Example 15 to be described later), thermosetting treatment at 250°C for 20 min was conducted in place of the above mentioned drying treatment.

The mass of the base material before application and the mass thereof after application and drying were measured, and the difference of mass was defined as the mass of the applied resin paint. Then, an average coating thickness was calculated from the density of the resin paint after drying, the mass of applied resin paint, and the surface area of the base material. The density of the resin paint after drying was defined as 1.18 g/cm³ for the acrylic resin paint, 1.07 g/cm³ for the phenolic resin paint, 1.18 g/cm³ for the petroleum-based tar paint, and 1.13 g/cm³ for the thermosetting polyimide resin paint.

### 4. Heat treatment step

The base material on which surface the resin paint had been supplied in the carbon source supply step was heat-treated in argon atmosphere by using a precise atmosphere continuous simulator MT960008 manufactured by ULVAC SHINKU-RIKO Inc. The heat treatment was performed by flowing an argon gas having the same composition as that when the base material B was prepared by annealing the base material A. At that time, the oxygen partial pressure in the argon atmosphere was 0.1 Pa. The dew point was -50°C.

### 5. Fabrication of conventional titanium material

In addition to the above titanium material, a specimen (conventional example) of a conventional titanium material was fabricated. The production method of the conventional example is as follows.

As Conventional Example 1, the titanium material described in Patent Literature 2 was fabricated. First, a titanium sheet having the same composition as the base material B and having a thickness of 40 mm was prepared. Rolling oil DAIROLL(registered trademark) manufactured by Daido Chemical Industry Co., Ltd. was applied to the titanium sheet. DAIROLL(registered trademark) was rolling oil containing no amine. This titanium sheet was heated to 800°C and rolled to a thickness of 15 mm. Next, the titanium sheet was reheated to 800°C, and thereafter rolled to a thickness of 1 mm. Subsequently, the titanium sheet was reheated to 800°C, and thereafter rolled to a thickness of 0.2 mm. For the obtained titanium sheet, it was confirmed by X-ray diffraction that TiC was generated and TiCN was not generated.

Thereafter, the titanium sheet was placed in a plasma CVD apparatus which was capable of introducing gas. After depressurizing the inside of the apparatus, H2 was introduced at a flow rate of 30 sccm (standard cc/min) and Ar was introduced at a flow rate of 30 sccm from a gas inlet of the apparatus, so that the pressure in the apparatus was 450 Pa. Subsequently, a DC voltage of 400 V was applied between an anode sheet and the titanium sheet, and the titanium sheet was heated to the temperature of 600°C. Thereafter, benzene gas for film formation was introduced into the apparatus at 30 ccm. Thereby, a carbon layer was grown on the surface of the titanium sheet. Film formation was completed when the thickness of the carbon layer reached 50 nm. The obtained specimen was used as the titanium material of Conventional Example 1.

As Conventional Example 2, the titanium material described in Patent Literature 3 was fabricated. The base material B was applied with a graphite paint (slurry containing graphite) by a No. 10 bar coater. As the graphite, high-purity natural graphite (SNE manufactured by SEC Carbon, Ltd.; average particle size of 7 µm (hereinafter, any SNE of the same company had an average particle size of 7 µm)) was used. The graphite paint was obtained by dispersing graphite in a 0.8 mass% carboxymethylcellulose aqueous solution. The graphite content of the graphite paint was 8 mass%. The base material applied with the graphite paint was naturally dried for one day.

Thereafter, the base material was subjected to skin pass rolling at a rolling reduction of 1%. Furthermore, this base material was heat-treated at 700°C for 2 minutes in Ar gas atmosphere containing 50 ppm of O₂ and was furnace-cooled to 100°C or less. The obtained specimen was used as the titanium material of Conventional Example 2.

As Conventional Example 3, the titanium material described in Patent Literature 4 was fabricated. A graphite paint containing, in mass%, 20% of phenol resin, 10% of high-purity natural graphite (SNE manufactured by SEC Carbon, Ltd.), and 70% of butyl carbitol was fabricated. This graphite paint was applied to the front and back surfaces of the base material B so as to have a thickness of 5 µm. Thereafter, the specimen was naturally dried for 1 day. Furthermore, this specimen was heat-treated at 550°C for 3 minutes in a vacuum furnace. The obtained specimen was used as the titanium material of Conventional Example 3.

As Conventional Example 4, the titanium material described in Patent Literature 5 was fabricated. A JIS Class 1 titanium material was used as the base material. This base material, which had a thickness of 200 µm, was subjected to BA (bright annealing) finishing. A graphite paint was applied to the surface (one side) of the base material so that the thickness was 10 µm. High-purity natural graphite (SNE manufactured by SEC Carbon, Ltd.) was used as the graphite. The graphite paint was obtained by dispersing graphite in a 1 mass% methylcellulose aqueous solution. The graphite content of the graphite paint was 8 mass%. The obtained specimen was naturally dried for 1 day. The thickness of the specimen after drying was 220 µm including the base material and the graphite paint.

Thereafter, the specimen was subjected to cold rolling. The thickness of the specimen after rolling was 100 µm. In other words, the rolling reduction was 54%. Next, the specimen was heat-treated at 700°C for 5 minutes in Ar atmosphere. The obtained specimen was used as the titanium material of Conventional Example 4.

As Conventional Example 5, the titanium material described in Patent Literature 6 was fabricated. The graphite paint was applied to the surface (one side) of the base material B such that the thickness was 10 µm. As the graphite powder, high-purity natural graphite (SNE manufactured by SEC Carbon, Ltd.) was used. The graphite paint was obtained by dispersing graphite in a 0.8 mass% carboxymethylcellulose aqueous solution. The graphite content of the graphite paint was 8 mass%. The obtained specimen was naturally dried for 1 day.

Next, this specimen was subjected to cold rolling at a rolling reduction of 2% using a cold rolling mill without applying a lubricant. Thereafter, this specimen was heat-treated at 650°C for 5 minutes under a pressure of 2×10⁻⁴ Torr (2.67×10⁻² Pa) in a vacuum furnace.

Subsequently, a graphite paint was applied to both sides of the obtained specimen with a bar coater. The thickness of the applied graphite paint was 10 µm per one side of the specimen. The graphite paint was obtained by dispersing carbon black powder (Valcan (registered trademark) XC72 manufactured by Cabot Corporation) and graphite powder (SNE manufactured by SEC Carbon, Ltd.) in a liquid in which a phenol resin was dissolved in butyl carbitol. The mass ratio among the phenol resin, the carbon black powder, and the graphite powder in the graphite paint was 75 : 22.5 : 2.5. This specimen was heat-treated at 400°C for 1 minute in the air. The obtained specimen was used as the titanium material of Conventional Example 5.

As Conventional Example 6, the titanium material described in Patent Literature 7 was fabricated. The base material B was degreased with acetone. The surface of this base material was coated with TiCN by ion plating. The thickness of the coated TiCN was 2 µm per one side of the base material. Next, the obtained specimen was immersed in a 20% nitric acid aqueous solution at 40°C for 2 minutes to perform passivation treatment. Subsequently, this specimen was immersed in a 50°C aqueous solution containing 0.1 mass% of corrosion inhibitor Hibiron (registered trademark) manufactured by Sugimura Chemical Industrial Co., Ltd. for 5 minutes, and subjected to stabilization treatment. The obtained specimen was used as the titanium material of Conventional Example 6.

As Conventional Example 7, the titanium material described in Patent Literature 8 was fabricated. A substrate made of the base material A was coated with a diamond-like carbon film. A Hall ion source (Hall Accelerator for low-voltage Continuous Operation) was used for coating the diamond-like carbon film. A hydrocarbon gas, specifically methane gas, was used as a raw material. Then, discharge plasma of methane gas was generated in the apparatus, and a beam of resulted hydrocarbon ions was generated. A diamond-like carbon film was formed by hitting the hydrocarbon ion beam against the substrate surface. Methane gas was flowed into the apparatus at a flow rate of 3 mL/min. The substrate current was 750 mA. The acceleration voltage of hydrocarbon ions (the voltage between the anode and the cathode) was 650V. The substrate temperature was 600°C. The obtained specimen was used as the titanium material of Conventional Example 7.

Table 2 shows the production conditions for each titanium material.

### [Table 2]

**Table 2**

| | Base material | Rolling lubrication additive | Oxidization step | Carbon source supply step | | Coating thickness (µm) | Heat treatment step | | |
|---|---|---|---|---|---|---|---|---|---|
| | | | | Resin paint | Thickener | | Atmosphere | Temperature (°C) | Time (sec) |
| Inventive Example 1 | B Fluonitric pickling | Absent | Alternating electrolysis | A | Absent | 18 | Ar | 720 | 45 |
| Inventive Example 2 | B | A | Alternating electrolysis | A | Absent | 19 | Ar | 720 | 45 |
| Inventive Example 3 | A | A | Alternating electrolysis | A | Absent | 22 | Ar | 720 | 45 |
| Inventive Example 4 | B | A | Alternating electrolysis | A | Present (5%) | 21 | Ar | 720 | 45 |
| Inventive Example 5 | B | A | Alternating electrolysis | A | Absent | 10 | Ar | 780 | 60 |
| Inventive Example 6 | B | A | Alternating electrolysis | A | Present (10%) | 42 | Ar | 720 | 30 |
| Inventive Example 7 | A | A | Alternating electrolysis | A | Absent | 18 | Ar | 750 | 30 |
| Inventive Example 8 | B | A | Alternating electrolysis | A | Absent | 32 | Ar | 680 | 45 |
| Inventive Example 9 | A | A | Alternating electrolysis | A | Absent | 20 | Ar | 750 | 60 |
| Inventive Example 10 | B | A | Alternating electrolysis | A | Absent | 38 | Ar | 640 | 60 |
| Inventive Example 11 | B | A | Alternating electrolysis | A | Absent | 13 | Ar | 790 | 30 |
| Inventive Example 12 | B | A | Alternating electrolysis | B | Absent | 17 | Ar | 720 | 45 |
| Inventive Example 13 | B | A | Atmospheric oxidation 550°C x 5 min | A | Absent | 20 | Ar | 720 | 60 |
| Inventive Example 14 | B | A | Alternating electrolysis | A | Absent | 37 | Ar | 620 | 85 |
| Inventive Example 15 | A | B | Alternating electrolysis | D | Absent | 8 | Ar | 810 | 120 |
| Comparative Example 1 | B | A | Alternating electrolysis | C | Absent | 18 | Ar | 720 | 45 |
| Comparative Example 2 | B | A | Alternating electrolysis | A | Absent | 38 | Ar | 620 | 60 |
| Conventional Example 1 | B | B | - | - | - | - | - | - | - |
| Conventional Example 2 | B | - | - | - | - | - | - | - | - |
| Conventional Example 3 | B | - | - | - | - | - | - | - | - |
| Conventional Example 4 | B | - | - | - | - | - | - | - | - |
| Conventional Example 5 | B | - | - | - | - | - | - | - | - |
| Conventional Example 6 | B | - | Immersion in 20% nitric acid aqueous solution | - | - | - | - | - | - |
| Conventional Example 7 | A | - | - | - | - | - | - | - | - |

| | | | | | | | | | |
|---|---|---|---|---|---|---|---|---|---|
| Rolling lubrication additive A: Lubrication additive for oxidation protection (containing dialkyldiphenylamine) manufactured by KANEDA Co., Ltd. B: DAIROLL (no amine contained) manufactured by Daido Chemical Industry Co., Ltd. Resin paint A: One mainly composed of aqueous acrylic resin B: One mainly composed of a phenolic resin C: one mainly composed of a petroleum-based tar resin D: One mainly composed of a thermosetting polyimide resin "-" indicates that relevant step was not performed. | | | | | | | | | |

For the obtained specimens, measurements of the abundance ratio of carbonitride, the thickness of the carbon layer, the peak intensity in Raman spectrum, the covering ratio of the carbon layer, the average particle size of titanium carbonitride, and the contact resistance were performed.

### 6. Abundance ratio of carbonitride

For the inventive examples, the integrated intensity of titanium carbonitride near the surface of the titanium material was calculated using an X-ray diffraction apparatus RINT2500 manufactured by Rigaku Corporation. The conditions for X-ray diffraction were as follows.
Incident angle: 0.3° (deg)
X-ray: Co-Kα ray
Excitation: 100 mA electron beam irradiation with an acceleration voltage of 30 kV
Range of diffraction angle (2θ) as measurement target: 10 to 110°
Scan: Step scan at 0.04° step
Fixed time for each step: 2 seconds

Except for Inventive Example 1, most of the detected diffraction peaks were attributed to diffraction lines resulting from α-Ti (JCPDS card 44-1294) and titanium carbonitride (JCPDS card 44-1488).

Any of strongest diffraction peaks Ti of α-Ti was attributed to the (101) plane. Moreover, the strongest peak of titanium carbonitride was attributed to the (200) plane in any of the specimens in which the peak of titanium carbonitride was detected. The integrated intensities of the peak attributed to the (101) plane of α-Ti and the peak attributed to the (200) plane of titanium carbonitride were calculated. The integrated intensities of the peaks were calculated after performing peak separation by fitting a diffraction curve including these peaks using the Asymmetric Pearson VII as a profile function. Hereinafter, the integrated intensity of the peak attributed to the (101) plane of α-Ti phase is referred to as "Ti(101)". Further, the integrated intensity of the peak attributed to the (200) plane of titanium carbonitride is referred to as "TiCN(200)". TiCN(200)/Ti(101) was calculated as the abundance ratio (TiCN/Ti) of carbonitride.

### 7. Thickness of carbon layer

The thickness of carbon layer was measured by a method based on the above-described method of glow discharge optical emission analysis. The glow discharge optical emission analysis was performed using a Marcus type high frequency glow discharge optical emission analyzer GD-profiler 2 manufactured by HORIBA, Ltd. Under the following measurement conditions, the C content was measured while performing sputtering in the depth direction from the surface. The reason why the discharge region was a circular region having a diameter of 4 mm was to obtain averaged information on the surface of the titanium material.
Discharge region: Circular region with a diameter of 4 mm
RF output: 35 W
Argon pressure: 600 Pa
Elements to be analyzed: Ti, O, C, H, N
Measurement depth: From the initial surface to 3 µm
Measurement mode: Pulse sputtering mode

### 8. Raman spectroscopy

The Raman spectroscopy of specimen surface was performed using the Raman spectrometer LabRAM HR Evolution manufactured by HORIBA, Ltd. under the following measurement conditions.
Excitation wavelength: 532 nm
Diffraction lattice engraving: 600 lines/mm
ND filter transmittance: 10%
Objective lens magnification: 50 times

In the obtained Raman spectrum, the integrated intensity in a range of wave number from 1.00 to 1.50×10⁵ m⁻¹ was assumed to be a peak intensity (I₁₃₅₀) near 1.35×10⁵ m⁻¹. In the obtained Raman spectrum, the integrated intensity in a range of wave number from 1.50 to 1.80×10⁵ m⁻¹ was assumed to be a peak intensity (I₁₅₉₀) around 1.59×10⁵ m⁻¹. The R value (I₁₃₅₀/I₁₅₉₀) was calculated from these peak intensities.

### 9. Diffraction pattern of transmission electron microscope image

Whether or not the carbon layer contains non-graphitizable carbon was determined by the above-described method based on the diffraction pattern of transmission electron microscope image. The specimen for observation was sampled as a thin film specimen from a titanium material by performing Au deposition on the surface of the titanium material and thereafter using the FIB-µ sampling method. The specimen for observation had a cross section perpendicular to the surface of the titanium material. The thickness of this specimen was 100 nm or less. A vacuum deposition apparatus (JEE-420T) manufactured by JEOL Ltd. was used for Au deposition. SMI3050SE manufactured by Hitachi High-Tech Science Corporation was used for the sampling by the FIB-µ sampling method. A mesh made of Mo was used.

Transmission electron microscope images were obtained at the following five locations on the obtained specimen (carbon layer).

Two locations that are 0.05 µm apart from each other near the surface of the carbon layer (5 nm depth position from the outermost surface).

Two locations that are 0.05 µm apart from each other at the center position in the depth direction of the carbon layer.

One location near the base material (a depth position at 5 nm from the interface between the base material and the carbon layer to the carbon layer side) in the carbon layer.

As the transmission electron microscope, a field emission type transmission electron microscope JEM-2100F manufactured by JEOL Ltd. was used. Electron beam diffraction was conducted by a microelectron diffraction method with an electron beam probe diameter of 1 nm such that a diffraction pattern attributed to the carbon layer was able to be obtained even if the carbon layer had a thickness of several nm. The acceleration voltage was 200 kV. The observation magnification was 500,000 times. A transmission electron microscope image was obtained for a square region having a side of 0.17 µm.

On each of the obtained transmission electron microscope images, the 002 diffraction pattern by electron beam diffraction was investigated. The diffraction pattern was analyzed using free analysis software "ReciPro ver. 4.281" published by the Graduate School of Science, Kobe University.

In the electron beam diffraction pattern of non-graphitizable carbon, a halo ring (hereinafter simply referred to as a "ring") is observed near a position corresponding to a lattice spacing of 3.4 Å (lattice spacing of (002) plane of graphite). Whether or not the specimen (carbon layer) includes non-graphitizable carbon was determined by the following procedure. This determination method is based on the technique described in the section of "3.1.4 Crystallinity of carbon compared from an electron beam diffraction pattern" of Non Patent Literature 4.

First, for each electron beam diffraction pattern, the relationship between the lattice spacing d and the relative contrast intensity I of image was obtained. The lattice spacing d can be calculated from the relationship of the following formula (A): $rd = Lλ$ (A) where,
r: moving radius measured from a photograph of a transmission electron microscope image (electron diffraction pattern),
L: camera length (distance between the specimen and the imaging unit of the camera) of TEM, and
λ: the wavelength of the electron beam. Specifically, the camera length of the TEM and the wavelength of the electron beam were L = 787 mm and λ = 0.00251 nm.

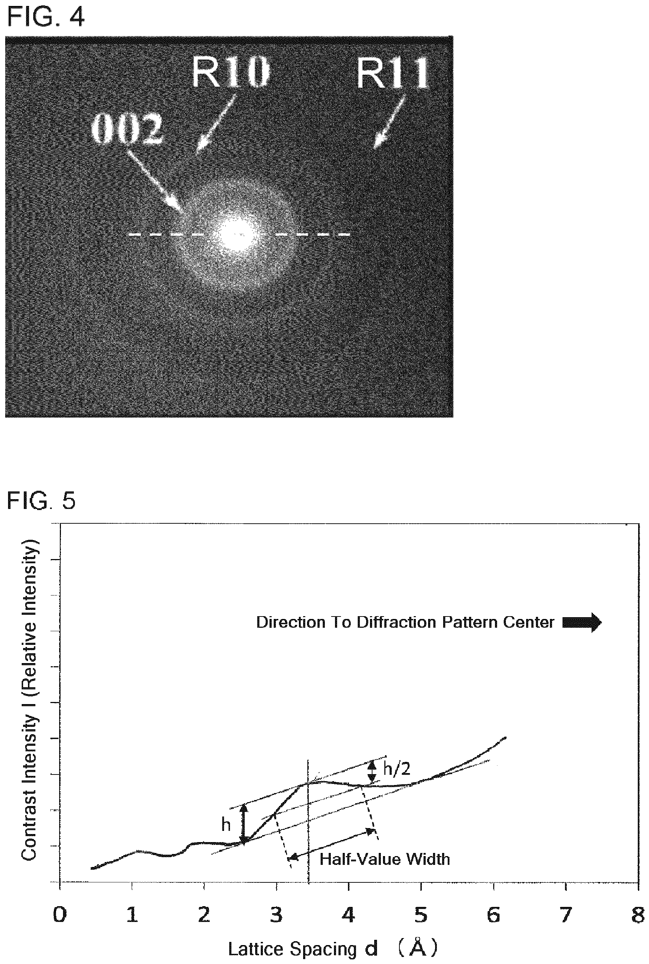

FIG. 4 shows an example of the electron beam diffraction pattern. A ring (halo ring; indicated as "002" in FIG. 4) is observed near the position corresponding to the lattice spacing (3.4 Å) of the (002) plane of graphite. Moreover, a ring R10 (halo ring) and a ring R11 (halo ring) are observed outside the ring 002. The ring R10 is a ring in which a ring appearing at a position corresponding to the lattice spacing of the (100) plane and a ring appearing at a position corresponding to the lattice spacing of the (101) plane overlap with each other. The ring R11 is a ring in which a ring that appears at a position corresponding to the lattice spacing of the (110) plane and a ring that appears at a position corresponding to the lattice spacing of the (112) plane overlap with each other. Note that the graph (FIG. 5; to be referred to later) which shows the relationship between the lattice spacing d and contrast intensity I was created for a portion along the broken line in the middle of FIG. 4.

An obtained transmission electron microscope image was read with a scanner to obtain digital data of the image. The settings of the scanner were under the condition as follows:
Reading magnification: 100%
Resolution: 1200 dpi
Gray scale gradation: 8 bits (2⁸ = 256 gradations between black and white)

Based on this digital data, the relationship between the lattice spacing d and the contrast intensity (relative intensity) I was determined. When the electron beam diffraction pattern is spotted, the relationship between d and I significantly differs between the case where a contrast intensity on a straight line passing a spot is adopted and a case where a contrast intensity on a straight line not passing a spot is adopted. For this reason, first, the presence or absence of a spot attributed to the (002) plane of graphite was confirmed. When spot was present, the contrast intensity on a straight line passing the center of the diffraction pattern and the spot attributed to the (002) plane of graphite was adopted.

To objectively determine the presence or absence of spots, a contrast intensity along a circle centered on the center of the diffraction pattern and having a radius corresponding to a lattice spacing of 3.4 Å was obtained on a transmission electron microscope image. A point (hereinafter referred to as a "local maximum point") at which the contrast intensity is local maximum (maximum) on this circumference was assumed to be the center of the spot. Then, the contrast intensity along a straight line passing the local maximum point and the center of the diffraction pattern was obtained. When the contrast intensity was substantially constant on the circumference and no significant local maximum was observed, the contrast intensity along a straight line passing an arbitrary point on the circumference and the center of the diffraction pattern was calculated.

Based on the results described so far, a graph showing the relationship between the lattice spacing d and the contrast intensity I was created. FIG. 5 shows an example of such graph showing the relationship between the lattice spacing d and the contrast intensity I. FIG. 5 shows the relationship between the lattice spacing d and the contrast intensity I for a portion on the right side from the center in the diffraction pattern of Inventive Example 1. In FIG. 5, the center of the diffraction pattern (a ring-shaped pattern in the case of the present embodiment) is on the right side, that is, on the side on which the lattice spacing d is larger.

In FIG. 5, a peak is observed near 3.4 Å. This peak corresponds to a ring attributed to the (002) plane of graphite. Whether or not this peak was attributed to non-graphitizable carbon was determined by a half-value width of this peak. In obtaining the half-value width, the height h of the peak was calculated by removing the background. Similarly, a graph indicating the relationship between the lattice spacing d and the contrast intensity I was created to obtain a half-value width for the left portion from the center of the ring as well. When the average value of the half-value widths on the right side and on the left side from the center of the ring is more than 1.0 Å, it was determined that the carbon layer was non-graphitizable carbon at the position where the transmission electron microscope image was obtained. In this case, it was determined that there was no spot attributed to the (002) plane of graphite.

In each specimen, when 3 or more locations out of the five locations were determined to be non-graphitizable carbon, it was determined that the carbon layer of the specimen included non-graphitizable carbon.

### 10. Covering ratio of carbon Layer

The covering ratio of carbon layer was obtained by the above-described method based on the Raman spectroscopy. At that time, the measurement region was a square having a side of 110 µm. In this measurement region, I₁₃₅₀ was measured with each of matrix-like regions, which were obtained by dividing each side into 90 equal parts, as an analysis point. In other words, the number of the analysis points was 90 × 90 = 8100 points.

### 11. Average particle size of titanium carbonitride

The average particle size of titanium carbonitride was obtained by the above-described method for identifying titanium carbonitride particles on an electron microscope image. The FIB-µ sampling method was performed by using SMI3050SE manufactured by Hitachi High-Tech Science Corporation. A mesh made of Mo was used. The electron microscope observation was performed using a field emission type transmission electron microscope JEM-2100F manufactured by JEOL Ltd. This electron microscope was equipped with an EDS analyzer JED-2300T. The observation magnification was 500,000 times. Electron beam diffraction was µ-diffraction.

### 12. Contact Resistance

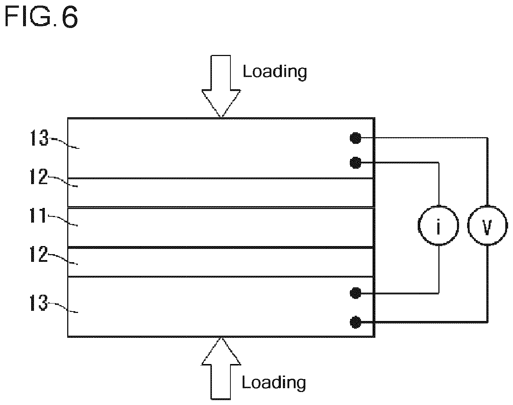

The contact resistance of the specimen of the obtained titanium material was measured according to the method described in Non Patent Literature 3. FIG. 6 is a diagram showing the configuration of an apparatus for measuring the contact resistance of a titanium material. Using this apparatus, the contact resistance of each specimen was measured. Referring to FIG. 6, first, a fabricated specimen 11 was sandwiched by a pair of carbon papers (TGP-H-90 manufactured by Toray Industries, Inc.) 12, which were to be used as an electrode film (gas diffusion layer) for a fuel cell stack, and was further sandwiched by a pair of gold-plated electrodes 13. The area of each carbon paper 12 was 1 cm².

Next, a loading of 10 kgf/cm² (9.81×10⁵ Pa) was applied between the pair of gold-plated electrodes 13. In FIG. 6, the direction of loading is indicated by a white arrow. In this state, a constant current was allowed to pass between the pair of gold-plated electrodes 13, and a voltage drop that occurred between the carbon paper 12 and the specimen 11 at this time was measured. Based on this result, a resistance value was calculated. Since the obtained resistance value was a total value of contact resistances of both sides of the specimen 11, it was divided by 2 to obtain a contact resistance value per one surface of the specimen 11. The contact resistance measured in this way was assumed to be the contact resistance for the first time.

Next, the loading applied between the pair of gold-plated electrodes 13 were changed successively from 5 kgf/cm² (4.90×10⁵ Pa), to 10 kgf/cm² (9.81×10⁵ Pa), 20 kgf/cm² (19.6×10⁵ Pa), 10 kgf/cm², and 5 kgf/cm². This change in loading was repeated 10 times. Thereafter, the pressure was set to 10 kgf/cm² (9.81×10⁵ Pa), and the contact resistance was measured as in the first contact resistance measurement. The contact resistance measured in this way was assumed as the contact resistance after loading 10 times.

### 13. Investigation of corrosion resistance

A specimen of the obtained titanium material (without repeatedly changing loading) was immersed in an aqueous solution of H₂SO₄ at 90°C and pH 3 for 96 hours, washed with water and dried. And the contact resistance (after the first time and after 10-times loading) of the specimen was measured by the above-described method. When the corrosion resistance is not good, since a passivated film on the surface of the titanium material grows, the contact resistance increases as compared to before immersion (initial stage).

### 14 Oxidation resistance when exposed to noble potential

A specimen of the obtained titanium material was immersed in an H₂SO₄ aqueous solution at 80°C and pH 3. In this state, platinum was used as a counter electrode, and the specimen potential was set to a noble potential of 0.9 V with respect to SHE (standard hydrogen electrode). After maintaining this potential for 24 hours, the specimen was washed with water and dried. And the contact resistance (after the first time and after 10-times loading) of the specimen was measured by the above-described method. When the oxidation resistance of the carbon layer is not good, since the thickness of the carbon layer is reduced, the foundation cannot be sufficiently protected. In this case, since the passivated film on the outer layer of the titanium material grows, the contact resistance increases as compared with before being (initially) immersed in the above mentioned H₂SO₄ aqueous solution.

### 15. Evaluation results

Table 3 shows the evaluation results of each titanium material.

### [Table 3]

**Table 3**

| | Thin film X-ray diffraction | | | Raman spectroscopy | | | Electron-beam diffraction image pattern | Carbon layer | | Carbonitride | Contact resistance mΩ·cm² | | | | | |
|---|---|---|---|---|---|---|---|---|---|---|---|---|---|---|---|---|
| | Ti (101) | TiCN (200) | TiCN/Ti | I₁₃₅₀ | I₁₅₉₀ | R | | Thickness (nm) | Covering ratio (%) | Average particle size (nm) | Initial state | | After corrosion resistance test | | After oxidation test | |
| | | | | | | | | | | | First time | After 10 times | First time | After 10 times | First time | After 10 times |
| Inventive Example 1 | 3676 | 0 TiC peak present | 0 | 24321 | 9210 | 2.64 | Ring-shaped | 34 | 72 | - | 8.4 | 8.6 | 8.8 | 9.1 | 14.1 | 13.6 |
| Inventive Example 2 | 4363 | 631 | 0.14 | 9394 | 3294 | 2.85 | Ring-shaped | 35 | 79 | 22 | 3.2 | 2.4 | 3.5 | 3.4 | 3.8 | 3.7 |
| Inventive Example 3 | 4028 | 1731 | 0.43 | 22641 | 10944 | 2.07 | Ring-shaped | 40 | 68 | 38 | 3.6 | 3.4 | 3.8 | 3.7 | 4.8 | 4.7 |
| Inventive Example 4 | 4108 | 1268 | 0.31 | 18293 | 7008 | 2.61 | Ring-shaped | 38 | 71 | 28 | 3.1 | 2.8 | 3.9 | 3.6 | 4.8 | 4.6 |
| Inventive Example 5 | 5209 | 1811 | 0.35 | 10238 | 4168 | 2.46 | Ring-shaped | 9 | 61 | 20 | 4.8 | 4.4 | 4.9 | 4.7 | 8.8 | 9.7 |
| Inventive Example 6 | 4923 | 620 | 0.13 | 9221 | 3364 | 2.74 | Ring-shaped | 103 | 84 | 43 | 8.8 | 8.6 | 9.2 | 9 | 9.7 | 9.5 |
| Inventive Example 7 | 3822 | 1654 | 0.43 | 15631 | 6539 | 2.39 | Ring-shaped | 25 | 65 | 55 | 4.6 | 43 | 4.8 | 4.8 | 8.9 | 9.8 |
| Inventive Example 8 | 5621 | 512 | 0.09 | 17635 | 7721 | 2.28 | Ring-shaped | 62 | 81 | 28 | 7.2 | 7 | 7.4 | 7.2 | 8.9 | 9.2 |
| Inventive Example 9 | 3644 | 1733 | 0.48 | 16395 | 7211 | 2.27 | Ring-shaped | 34 | 60 | 49 | 2.8 | 2.4 | 3.1 | 2.8 | 9.4 | 9.8 |
| Inventive Example 10 | 4922 | 493 | 0.10 | 14225 | 6891 | 2.06 | Ring-shaped | 98 | 92 | 18 | 7.8 | 8.1 | 8.3 | 8.9 | 9.6 | 9.9 |
| Inventive Example 11 | 4836 | 2136 | 0.44 | 13268 | 5894 | 2.25 | Ring-shaped | 10 | 59 | 50 | 2.8 | 2.6 | 3.2 | 3 | 9.6 | 9.8 |
| Inventive Example 12 | 3887 | 1269 | 0.33 | 15932 | 6231 | 2.56 | Ring-shaped | 23 | 68 | 24 | 3.3 | 3.1 | 4.3 | 4.2 | 4.9 | 4.9 |
| Inventive Example 13 | 6351 | 681 | 0.11 | 16321 | 7321 | 2.23 | Ring-shaped | 35 | 68 | 23 | 4.3 | 3.8 | 4.6 | 4.2 | 4.2 | 4.8 |
| Inventive Example 14 | 4439 | 859 | 0.19 | 18626 | 5381 | 3.5 | Ring-shaped | 96 | 81 | 22 | 8.8 | 8.8 | 9.2 | 9.1 | 9.7 | 9.9 |
| Inventive Example 15 | 4713 | 1769 | 0.38 | 586207 | 257642 | 2.28 | Ring-shaped | 65 | 93 | 21 | 4.6 | 4.2 | 5.1 | 4.8 | 6.3 | 5.1 |
| Comparative Example 1 | 4865 | 1033 | 0.21 | 12011 | 9369 | 1.28 | Ring-shaped | 28 | 73 | 24 | 3.4 | 3.3 | 4.1 | 3.9 | 20.3 | 28.6 |
| Comparative Example 2 | 4032 | 522 | 0.13 | 17863 | 4953 | 3.6 | Ring-shaped | 98 | 80 | 21 | 123 | 11.4 | 14.6 | 13.8 | 14.9 | 14.8 |
| Conventional Example 1 | - | - | - | 14873 | 8263 | 1.8 | Spotted | 200 | - | - | 10.1 | 11.3 | 12.6 | 13.4 | 14.9 | 17.2 |
| Conventional Example 2 | - | - | - | - | - | - | Spotted | 5000 | - | - | 8.8 | 9.6 | 9.3 | 14.2 | 14.6 | 21.2 |
| Conventional Example 3 | - | - | - | 3840 | 6982 | 0.55 | - | - | - | - | 10.6 | 13.2 | 12.2 | 15.8 | 18.7 | 19.8 |
| Conventional Example 4 | - | - | - | 5294 | 5072 | 1.04 | - | - | - | - | 8.4 | 8.9 | 9.2 | 10.7 | 17.8 | 17.7 |
| Conventional Example 5 | - | - | - | - | - | - | - | - | - | - | 11.6 | 12.9 | 17.2 | 18.6 | 18.4 | 19.4 |
| Conventional Example 6 | - | - | - | - | - | - | - | - | - | - | 9.7 | 12.2 | 14.8 | 15.9 | 80.6 | 107 |
| Conventional Example 7 | 7612 | 0 | 0.00 | 183543 | 72836 | 2.52 | Spotted | 112 | 95 | - | 10.3 | 9.6 | 9.2 | 9.1 | 352 | 341 |

| | | | | | | | | | | | | | | | | |
|---|---|---|---|---|---|---|---|---|---|---|---|---|---|---|---|---|
| "-" indicates unmeasured. | | | | | | | | | | | | | | | | |

In Inventive Examples 1 to 15, the contact resistance was hardly increased by loading 10 times in any of the initial state, the state after the corrosion resistance test, and the state after the oxidation test. In Inventive Examples 1 to 15, the contact resistance after 10-times loading and after the corrosion resistance test showed a low value of 10 mΩ•cm² or less. Further, in the inventive examples, the contact resistance after 10-times loading and after the oxidation test (hereinafter referred to as "contact resistance after heavy loading") showed a low value of 14 mΩ•cm² or less. In other words, all of Inventive Examples 1 to 15 were able to maintain low contact resistance even when exposed to noble potential.

The contact resistance after heavy loading of Inventive Example 1 was higher than the contact resistance after heavy loading of Inventive Examples 2 to 15. Considering from the fact that while titanium carbonitride was detected in Inventive Examples 2 to 15, titanium carbonitride was not detected in Inventive Example 1, a titanium carbonitride contributed to reduction of contact resistance. In Inventive Example 1, since the heat treatment was performed in a state where N (nitrogen) was substantially absent on the surface of the base material, a titanium carbonitride was not formed.

It can be seen from comparison between Inventive Examples 2 to 4 and Inventive Example 5 that when the thickness of the carbon layer is less than 10 nm, the contact resistance after heavy loading becomes higher than when the thickness of the carbon layer is 10 to 100 nm. It can also be seen from comparison between Inventive Examples 2 to 4 and Inventive Example 6 that when the thickness of the carbon layer is more than 100 nm, the contact resistance after heavy loading becomes higher than when the thickness of the carbon layer is 10 to 100 nm or more.

It can be seen from comparison between Inventive Examples 2 to 4 and Inventive Example 7 that when the average particle size of carbonitride is more than 50 nm, the contact resistance after heavy loading becomes higher than when the average particle size of carbonitride is 20 to 50 nm. It can also be seen from comparison between Inventive Examples 2 to 4 and Inventive Example 10 that when the average particle size of the carbonitride is less than 20 nm, the contact resistance after heavy loading becomes higher than when the average particle size of the carbonitride is 20 to 50 nm.

It can be seen from comparison between Inventive Examples 2 to 4 and Inventive Example 8 that when the abundance ratio of carbonitride (TiCN/Ti) is less than 0.1, the contact resistance after heavy loading becomes higher than when the abundance ratio of carbonitride is 0.1 to 0.45. It can also be seen from comparison between Inventive Examples 2 to 4 and Inventive Example 9 that when the abundance ratio of carbonitride is more than 0.45, the contact resistance after heavy loading becomes higher than when the abundance ratio of carbonitride is 0.1 to 0.45.

It can be seen from comparison between Inventive Examples 2 to 4 and Inventive Example 11 that when the covering ratio of the carbon layer is less than 60%, the contact resistance after heavy loading becomes higher than when the covering ratio of the carbon layer is 60% or more.

The R value of Inventive Example 14 was at the upper limit of the range of R value specified in the present invention. Although the contact resistance after heavy loading of Inventive Example 14 was 10 mΩ•cm² or less, it was higher than, for example, those of Inventive Examples 2 and 3, whose R value were 2.0 to 2.9.

Inventive Example 15 was obtained by coating a resin paint including a thermosetting polyimide resin. In Inventive Example 15, the covering ratio of the carbon layer was more than 90%. This is conceivably because, as a result of using the thermosetting polyimide resin, the amount of carbon that volatilized as a gas such as hydrocarbon, CO, and CO₂ in the heat treatment step was small, and a large amount of components included in the resin paint remained. In Inventive Example 15, the level of increase in the contact resistance value from the initial state to the state after the corrosion resistance test or the oxidation test was small. In other words, the specimen of Inventive Example 15 was excellent in corrosion resistance. This is conceivably because TiCN and TiC that ensure high conductivity were sufficiently protected due to the fact that the carbon layer was dense and that the covering ratio of the carbon layer was large.

Comparative Example 1 did not satisfy the requirements of the present invention in that the R value was less than 2. This related to the use of a resin paint mainly composed of petroleum-based tar resin as a carbon source. Comparative Example 2 did not satisfy the requirements of the present invention in that the R value was more than 3.5. This related to the fact that the temperature of the heat treatment was low. The contact resistance after heavy loading of Comparative Examples 1 and 2 showed a high value of more than 14 mΩ•cm².

The R values of Conventional Examples 1, 3, and 4 were less than 2. In fabricating Conventional Examples 2 to 5, since a graphite paint was applied to the base material, a carbon layer mainly composed of graphite was formed on these specimens. Therefore, the R values of Conventional Examples 2 and 5 were also less than 2. Further, due to the fact that a carbon layer mainly composed of graphite was formed in each of Conventional Examples 2 to 5, these carbon layers were not non-graphitizable carbon. Since the step of forming a carbon layer was not performed when fabricating Conventional Example 6, Conventional Example 6 did not have a carbon layer. Therefore, none of the conventional examples satisfied the requirements of the present invention.

For Conventional Examples 1 to 5, the X-ray diffraction measurement was not performed. However, when fabricating any of these specimens, it was considered that a titanium carbonitride was not formed because each specimen was heated in substantially absence of any nitrogen source.

In Conventional Example 7, a film of diamond-like carbon was formed on the base material. As a result of examining the electron diffraction pattern of the transmission electron microscope image of this film, a spotted diffraction pattern attributed to the (111) plane of diamond was observed, and a ring-shaped diffraction pattern attributed to the (002) plane of graphite was not observed. From the above-described determination based on the half-value width, the specimen of Conventional Example 7 did not include a carbon layer including non-graphitizable carbon.

The contact resistance after heavy loading of Conventional Examples 1 to 7 showed values as high as 17 mΩ•cm² or more. In particular, the contact resistance after heavy loading of Conventional Example 7 showed an extremely high value of more than 300 mΩ•cm². In other words, Conventional Examples 1 to 7 were not able to maintain low contact resistance when exposed to noble potential.

### REFERENCE SIGNS LIST

1: Polymer electrolyte fuel cell stack
5a, 5b: Separator
7: Titanium material
8: Base material
9: Carbon layer
10: Titanium carbonitride
11: Specimen (titanium material)

## Claims

1. A titanium material, comprising:
a base material made of pure titanium or a titanium alloy; and
a carbon layer covering a surface of the base material, wherein
the carbon layer includes non-graphitizable carbon, and has an R value of 2.0 or more and 3.5 or less, the R value being defined by the following Formula (1) in the Raman spectroscopy using argon laser having a wavelength of 532 nm: $R = {I}_{1350} / {I}_{1590}$ (1)
where I₁₃₅₀ is a peak intensity at a wave number of around 1.35×10⁵ m⁻¹ in a Raman spectrum, and
I₁₅₉₀ is a peak intensity at a wave number of around 1.59×10⁵ m⁻¹ in a Raman spectrum.

2. The titanium material according to claim 1, wherein
a thickness of the carbon layer is 10 to 100 nm.

3. The titanium material according to claim 1 or 2, further comprising:
a titanium carbonitride formed between the base material and the carbon layer.

4. A separator of a fuel cell stack, comprising the titanium material according to claims 1 to 3.

5. A fuel cell of a fuel cell stack, comprising the separator according to claim 4.

6. A fuel cell stack, comprising the fuel cell according to claim 5.
